(19) **Europäisches Patentamt** / **European Patent Office** / **Office européen des brevets**

(11) **EP 1 820 431 A1**

(12) **DEMANDE DE BREVET EUROPEEN**

(43) Date de publication:
**22.08.2007 Bulletin 2007/34**

(51) Int Cl.:
*A47J 43/07* ^(2006.01)

(21) Numéro de dépôt: **07290192.9**

(22) Date de dépôt: **15.02.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **16.02.2006 FR 0601376**

(71) Demandeur: **Electrolux Professionnel**
**60300 Senlis (FR)**

(72) Inventeurs:
• **Descomps, Xavier**
**23200 Blessac (FR)**
• **Roussat, Bruno**
**23200 Saint Amand (FR)**

(74) Mandataire: **Domenego, Bertrand et al**
**Cabinet Lavoix**
**2, place d'Estienne d'Orves**
**75441 Paris Cedex 09 (FR)**

(54) **Outil de coupe perfectionné pour appareil de préparation alimentaire, et appareil comportant un tel outil**

(57) Cet outil de coupe comprend un moyeu (11) adapté pour être monté sur un arbre d'entraînement en rotation appartenant à l'appareil, un couteau (12) doté d'une lame de coupe (35,37), le couteau (12) étant solidaire du moyeu (11) de telle façon que ladite lame (35,37) fait saillie radialement du moyeu (11), et une masselotte (29) d'équilibrage de l'outil. La masselotte (29) est rapportée et fixée sur le moyeu (11).

FIG.2

**Description**

La présente invention concerne un outil de coupe pour appareil de préparation alimentaire, notamment un appareil de type cutter, mélangeur, ou mixeur électrique.

L'invention concerne plus précisément un outil de coupe comprenant un moyeu adapté pour être monté sur un arbre d'entraînement en rotation appartenant à l'appareil, un couteau doté d'au moins une lame de coupe, le couteau étant solidaire du moyeu de telle façon que ladite lame fait saillie radialement du moyeu, et une masselotte d'équilibrage de l'outil.

Les outils de ce type sont généralement prévus pour pouvoir être entraînés à des vitesses de rotation élevées. Il est donc nécessaire, pour minimiser les vibrations et les efforts d'arrachement subis par l'arbre d'entraînement, d'équilibrer l'outil par rapport à son axe de rotation.

On connaît des outils de coupe du type précité, équilibrés par rapport à leur axe de rotation par une masselotte disposée sur le couteau, sur une partie saillante par rapport au moyeu.

L'équilibrage de l'outil par un tel moyen n'est pas entièrement satisfaisant, en particulier parce que la masselotte prévue sur chaque couteau est susceptible de perturber l'écoulement du produit autour de la lame, et ainsi de perturber le travail de la lame.

L'invention a notamment pour but de remédier à cet inconvénient, et à cet effet, a pour objet un outil de coupe du type précité, dans lequel le moyeu comporte au moins un logement dans lequel est agencée la masselotte d'équilibrage.

Grâce à cette disposition, il est possible d'équilibrer l'outil au moyen d'une seule masselotte, dont l'emplacement peut être choisi par le concepteur avec une grande latitude, y compris lorsque l'outil comporte plusieurs couteaux superposés. Dans un tel cas, l'invention a pour avantage de diminuer la masse totale nécessaire à l'équilibrage, en comparaison avec un équilibrage lame par lame connu dans l'état de la technique.

Suivant d'autres caractéristiques, optionnelles, de l'invention, prises seules ou selon toutes les combinaisons techniquement envisageables :

- le moyeu comporte au moins un logement dans lequel est agencée la masselotte d'équilibrage ;
- le moyeu comprend un corps réalisé en matière plastique moulée, et dans lequel est formé le logement de réception de la masselotte ;
- le corps est réalisé par surmoulage sur le couteau ;
- le logement débouche à l'extérieur du corps, de sorte que la masselotte peut être introduite dans le logement après formation du corps ;
- le moyeu comprend un couvercle d'obturation du logement rapporté et fixé sur le corps ;
- le logement débouche à une extrémité axiale du corps, et le couvercle est fixé à ladite extrémité axiale du corps ;

- le couvercle est réalisé en matière plastique et soudé sur le corps ; et
- la masselotte est décalée axialement par rapport au couteau.

L'invention a également pour objet un appareil de préparation alimentaire comportant un outil tel que décrit précédemment.

L'invention sera mieux comprise à la lecture de la description qui va suivre, donnée uniquement à titre d'exemple et faite en se référant aux dessins annexés, sur lesquels :

- la figure 1 est une vue schématique en perspective d'un appareil de préparation alimentaire équipé d'un outil conforme à l'invention ;
- la figure 2 est une vue en perspective, à plus grande échelle et partiellement éclatée, de l'outil représenté sur la figure 1 ;
- la figure 3 est une vue en coupe, dans le plan axial 3-3 indiqué sur la figure 2, de l'outil des figures précédentes ; et
- la figure 4 est une vue schématique en coupe axiale de l'outil des figures précédentes, illustrant un calcul d'équilibrage de l'outil.

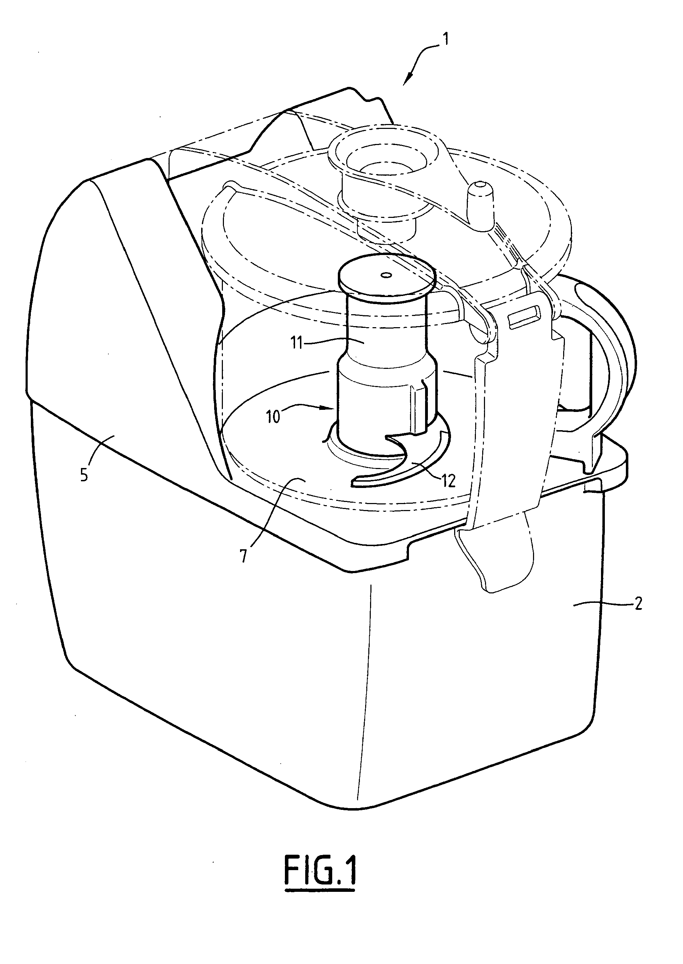

Sur la figure 1, on a représenté un appareil de type cutter, plus particulièrement utilisé dans le domaine de la préparation alimentaire pour collectivités.

De façon classique, l'appareil 1 comporte essentiellement un socle ou embase 2 pouvant reposer sur une surface d'appui par l'intermédiaire de pieds, un carter de moteur 5, et une cuve de préparation 7.

Le carter de moteur 5 contient un moteur électrique dont l'arbre de sortie est relié à un arbre d'entraînement rotatif (non visible sur les figures), qui fait saillie verticalement de l'embase 2 dans la cuve 7.

La cuve de préparation 7 est fixée de façon détachable sur l'embase 2 de façon à recevoir l'arbre d'entraînement dans son volume intérieur.

L'appareil 1 comporte en outre un outil 10 monté solidaire en rotation sur l'arbre d'entraînement, de façon détachable.

En référence aux figures 1 à 3, on va à présent décrire plus en détail l'outil 10.

Ce dernier comprend essentiellement un moyeu 11 en matière plastique, et un couteau métallique 12.

Le moyeu 11 comprend un corps tubulaire 21, doté intérieurement d'une forme d'entraînement 23 prévue pour coopérer coaxialement par complémentarité de forme avec l'arbre d'entraînement, et ainsi assurer la liaison solidaire en rotation de l'outil 10 avec l'arbre d'entraînement.

Le corps 21 a une forme générale de révolution autour de son axe Z, correspondant à l'axe vertical de rotation de l'outil en fonctionnement.

A une extrémité axiale, le corps 21 présente trois plots creux 25 en saillie axiale, répartis de façon régulière autour de l'axe Z, et dotés chacun d'un logement borgne 27 débouchant vers l'extérieur du corps 21 à la même extrémité de ce dernier.

L'outil 10 comprend en outre une masselotte 29 d'équilibrage de l'outil, en particulier une masselotte métallique, de forme complémentaire de l'un 27A des logements 27 et placée dans ce dernier.

Grâce à l'ouverture du logement 27A vers l'extérieur du corps 21, la masselotte 29 peut être introduite dans le logement, après fabrication du corps 21, par insertion axiale Z.

Le moyeu 11 comprend par ailleurs un couvercle 31 en forme générale de disque, fixé coaxialement au corps 21 sur les plots 25 à l'extrémité correspondante du corps 21, de façon à obturer les logements 27, 27A.

Ainsi, la masselotte 29 est rapportée sur le moyeu 11 et fixée à ce dernier.

Dans l'exemple représenté, le corps 21 et le couvercle 31 sont réalisés séparément en matière plastique, par moulage, le couvercle 31 étant rapporté et fixé sur le corps 21, par exemple par soudage.

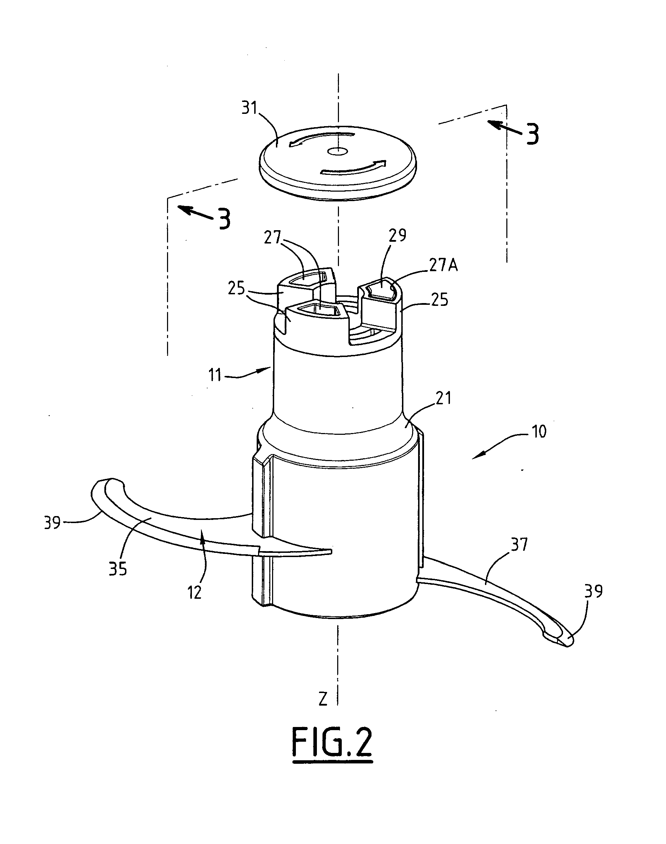

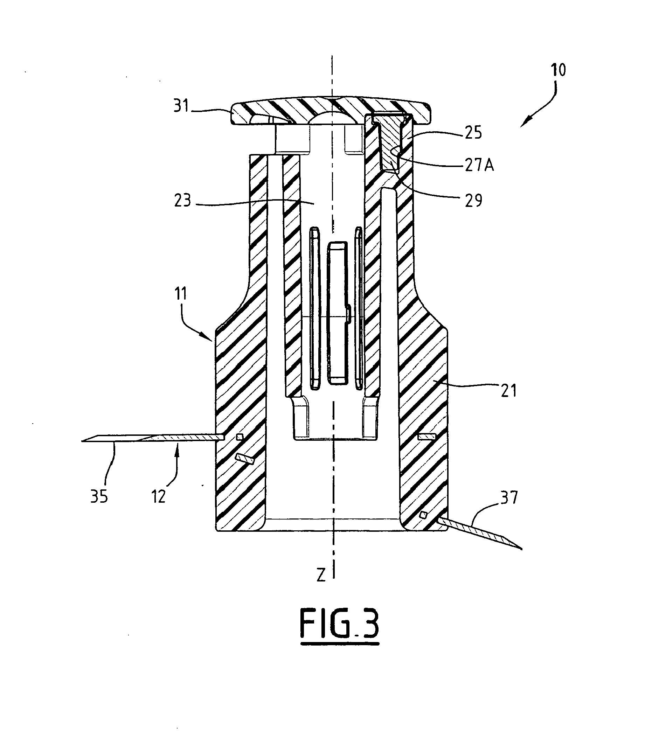

Comme cela est visible sur les figures 2 et 3, le couteau 12 est solidaire du moyeu 11, et possède deux lames 35, 37 diamétralement opposées, faisant saillie radialement du corps 31.

Dans l'exemple représenté, les deux lames 35, 37 possèdent un bord d'attaque tranchant 39, et l'une 37 des deux lames est inclinée par rapport au plan orthogonal à l'axe de rotation Z, l'autre lame 36 s'étendant généralement dans ce plan.

De préférence, le corps 21 est surmoulé sur le couteau 12.

On notera que la masselotte 29 est axialement décalée par rapport à la position du couteau 12, ce décalage étant prévu de façon à équilibrer l'outil 10 en flexion par rapport à l'axe de rotation Z.

La masselotte a une géométrie, une masse, et une position axiale adaptées pour réaliser l'équilibrage en flexion de l'outil.

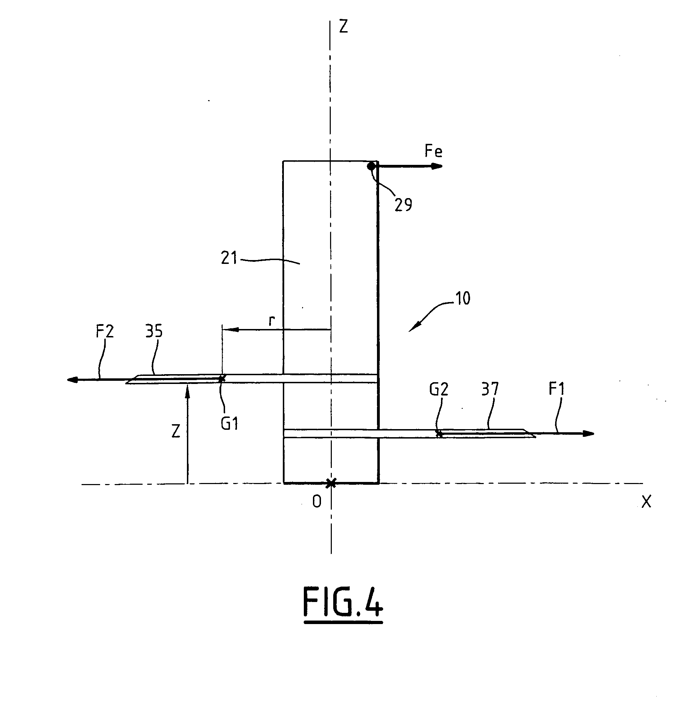

Sur la figure 4, on a représenté l'outil 10 de façon schématique, selon une modélisation utilisée pour le calcul d'équilibrage.

Sur cette figure, le point 0 représente le point d'encastrement de l'outil, situé sur l'axe Z à la base de l'outil, c'est-à-dire au niveau de son appui sur le palier.

On a également porté sur cette figure l'axe horizontal X passant par ce point d'encastrement 0.

Les centres de gravité des lames 35 et 37 sont notés respectivement $G_1$ et $G_2$.

La masselotte 29, ainsi que les centres de gravité $G_1$ et $G_2$ des lames 35, 37, sont repérés sur la figure par :

- leur distance z à l'axe X, notée respectivement $z_e$, $z_1$, $z_2$ ;
- leur distance r à l'axe Z, notée respectivement $r_e$, $r_1$, $r_2$.

L'équilibrage de l'outil consiste à rendre nulle (en pratique très proche de zéro) la somme des moments, par rapport au point d'encastrement 0, des efforts d'inertie s'appliquant sur l'outil lors de la rotation de ce dernier.

Selon un modèle d'équilibrage simplifié, si l'on note respectivement $F_e$, $F_1$, $F_2$, les efforts d'inertie s'appliquant respectivement sur la masselotte 29, et les lames 35, 37, la condition d'équilibrage en flexion se traduit par la condition :

$$z_e.F_e + z_1.F_1 + z_2.F_2 = 0$$

soit :

$$m_e = (-z_1.m_1.r_1 - z_2.m_2.r_2)/z_e.r_e.$$

On conçoit que l'invention peut être réalisée également en utilisant un nombre supérieur de masselottes, placées dans plusieurs logements répartis dans le corps du moyeu.

Par rapport aux solutions existantes d'équilibrage d'outil de coupe, l'invention procure l'avantage d'une grande simplicité de réalisation, les logements de réception de la masselotte pouvant être obtenus par moulage de façon extrêmement simple et non contraignante.

L'invention procure également une grande flexibilité pour réaliser l'équilibrage, puisqu'elle offre une grande liberté quant à la position des masselottes dans l'outil, que ce soit radialement ou axialement. C'est ainsi que l'équilibrage par rapport à l'axe de rotation et l'équilibrage en flexion peuvent être réalisés par les mêmes moyens.

On notera que la possibilité d'utiliser une seule masselotte quel que soit le nombre de lames, c'est-à-dire d'équilibrer l'ensemble de l'outil et non chaque lame individuellement, permet de réduire sensiblement la masse de l'outil. Cela est d'une particulière importance pour les outils de grandes dimensions utilisés dans la préparation alimentaire professionnelle.

**Revendications**

1. Outil de coupe pour appareil de préparation alimentaire comprenant un moyeu (11) adapté pour être monté sur un arbre d'entraînement en rotation appartenant à l'appareil, un couteau (12) doté d'au moins une lame de coupe (35,37), le couteau (12) étant solidaire du moyeu (11) de telle façon que ladite lame (35,37) fait saillie radialement du moyeu (11), et une masselotte (29) d'équilibrage de l'outil, **ca-**

**ractérisé en ce que** la masselotte (29) est rapportée et fixée sur le moyeu (11).

2. Outil suivant la revendication 1, **caractérisé en ce que** le moyeu (11) comporte au moins un logement (27A) dans lequel est agencée la masselotte d'équilibrage (29).

3. Outil suivant la revendication 2, **caractérisé en ce que** le moyeu (11) comprend un corps (21) réalisé en matière plastique moulée, et dans lequel est formé le logement (27A) de réception de la masselotte (29).

4. Outil suivant la revendication 3, **caractérisé en ce que** le corps (21) est réalisé par surmoulage sur le couteau (12).

5. Outil suivant l'une quelconque des revendications 2 à 4, **caractérisé en ce que** le logement (27A) débouche à l'extérieur du corps (21), de sorte que la masselotte (29) peut être introduite dans le logement (27A) après formation du corps (21).

6. Outil suivant la revendication 5, **caractérisé en ce que** le moyeu (11) comprend un couvercle (31) d'obturation du logement (27A) rapporté et fixé sur le corps (21).

7. Outil suivant la revendication 6, **caractérisé en ce que** le logement (27A) débouche à une extrémité axiale du corps (21), et le couvercle (31) est fixé à ladite extrémité axiale du corps (21).

8. Outil suivant l'une quelconque des revendications 5 à 7, **caractérisé en ce que** le couvercle (31) est réalisé en matière plastique et soudé sur le corps (21).

9. Outil suivant l'une quelconque des revendications 1 à 8, **caractérisé en ce que** la masselotte (29) est décalée axialement par rapport au couteau (12).

10. Appareil de préparation alimentaire comportant un outil suivant l'une quelconque des revendications 1 à 9.

FIG.1

FIG.2

FIG.3

EP 1 820 431 A1

FIG.4

8

**Office européen des brevets**

# RAPPORT DE RECHERCHE EUROPEENNE

Numéro de la demande

EP 07 29 0192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 360 285 A2 (SEB SA [FR]) 3 mars 1978 (1978-03-03) * page 4, ligne 10 - page 5, ligne 1 * * figures 2,3 * ----- | 1-3,5,9, 10 | INV. A47J43/07 |
| X | EP 0 834 276 A1 (SEB SA [FR]) 8 avril 1998 (1998-04-08) * colonne 3, ligne 31 - ligne 43 * * figure 1 * ----- | 1-4,9,10 | |
| X | EP 1 483 996 A (SEB SA [FR]) 8 décembre 2004 (2004-12-08) * alinéa [0006] * & FR 2 743 710 A1 (SEB SA [FR]) 25 juillet 1997 (1997-07-25) * page 4, ligne 13 - ligne 17 * * figure 1 * ----- | 1-3,5-10 | |
| X | JP 04 040919 A (HITACHI HOME TEC LTD) 12 février 1992 (1992-02-12) * abrégé * * figures 1,3a,3b * ----- | 1-3,5,9, 10 | DOMAINES TECHNIQUES RECHERCHES (IPC) A47J |

Le présent rapport a été établi pour toutes les revendications

| Lieu de la recherche | Date d'achèvement de la recherche | Examinateur |
|---|---|---|
| La Haye | 24 avril 2007 | Kempeneers, Johanna |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 0192

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2007

| Document brevet cité au rapport de recherche | | Date de publication | Membre(s) de la famille de brevet(s) | | Date de publication |
|---|---|---|---|---|---|
| FR 2360285 | A2 | 03-03-1978 | AUCUN | | |
| EP 0834276 | A1 | 08-04-1998 | AT | 192909 T | 15-06-2000 |
| | | | DE | 69702034 D1 | 21-06-2000 |
| | | | DE | 69702034 T2 | 21-12-2000 |
| | | | DE | 972483 T1 | 02-11-2000 |
| | | | ES | 2146968 T3 | 16-08-2000 |
| | | | ES | 2146194 T1 | 01-08-2000 |
| | | | FR | 2754165 A1 | 10-04-1998 |
| | | | GR | 3034066 T3 | 30-11-2000 |
| | | | PT | 834276 T | 31-10-2000 |
| EP 1483996 | A | 08-12-2004 | FR | 2855740 A1 | 10-12-2004 |
| FR 2743710 | A1 | 25-07-1997 | AU | 1548997 A | 20-08-1997 |
| | | | BR | 9707148 A | 06-04-1999 |
| | | | CN | 1209735 A | 03-03-1999 |
| | | | DE | 69705603 D1 | 16-08-2001 |
| | | | DE | 69705603 T2 | 08-05-2002 |
| | | | EP | 0876122 A1 | 11-11-1998 |
| | | | ES | 2159834 T3 | 16-10-2001 |
| | | | WO | 9726817 A1 | 31-07-1997 |
| | | | GR | 3036833 T3 | 31-01-2002 |
| | | | HK | 1018586 A1 | 14-05-2004 |
| | | | JP | 3789484 B2 | 21-06-2006 |
| | | | JP | 2000503861 T | 04-04-2000 |
| | | | RU | 2188570 C2 | 10-09-2002 |
| | | | TR | 9801386 T2 | 21-10-1998 |
| | | | US | 6089746 A | 18-07-2000 |
| JP 4040919 | A | 12-02-1992 | JP | 2794133 B2 | 03-09-1998 |

EPO FORM P0460

Pour tout renseignement concernant cette annexe : voir Journal Officiel de l'Office européen des brevets, No.12/82